# EUROPEAN PATENT APPLICATION

(11) **EP 1 832 464 A2**
(43) Date of publication of application: **12.09.2007**
(21) Application number: 07003333.7
(22) Date of filing: 16.02.2007
(51) Int. Cl.: B60L 1/00, B60L 3/12

(54) **Reprogramming system and electronic control unit for hybrid vehicle**

(30) Priority: 08.03.2006 JP 2006062707
(71) Applicant: DENSO CORPORATION, Kariya-city, Aichi-pref. 448-8661 (JP)
(72) Inventor: Tabei, Makoto, Kariya-city Aichi-pref., 448-8661 (JP); Miyano, Hidemasa, Kariya-city Aichi-pref., 448-8661 (JP)
(74) Representative: Winter, Brandl, Fürniss, Hübner Röss, Kaiser, Polte Partnerschaft Patent- und Rechtsanwaltskanzlei

(57) **Abstract**

A reprogramming system such as an electric control unit (ECU) mounted on a hybrid vehicle so controls that an auxiliary battery is charged from the main battery when a voltage of the auxiliary battery is lower than an executable voltage which is a necessary voltage of adequately performing a reprogramming process. Further, the ECU controls that the main battery is charged when the voltage of the main battery is lower than a chargeable voltage which is a necessary voltage of adequately charge the auxiliary battery with an electric power. A reprogramming system mounted on the hybrid vehicle performs the reprogramming process of replacing a program stored in an internal memory unit of the ECU with a new program transferred from a reprogramming device when the voltage of the auxiliary battery is not less than an executable voltage.

## Description

### CROSS-REFERENCE TO RELATED APPLICATIONS

This application is related to and claims priority from Japanese Patent Application No. 2006-62707 filed on March 8, 2006, the contents of which are hereby incorporated by reference.

### BACKGROUND OF THE INVENTION

### 1. Field of the invention

The present invention relates to a reprogramming system and an electric control unit (ECU) capable of replacing, with a new program, a program currently stored in an internal memory unit mounted on the ECU for vehicles such as a hybrid vehicle and an electric car.

### 2. Description of the Related Art

An electric control unit (ECU) mounted on vehicles such as a hybrid vehicle and an electric car is equipped with an internal memory unit such as a onboard memory mounted on an electric board on which the ECU is fabricated. When receiving a reprogramming request transferred from a program supply device, a conventional reprogramming system including the ECU initiates a reprogramming process of replacing, namely, rewriting a program stored in the internal memory unit without detaching the internal memory unit from the electric board. In such a conventional reprogramming system, the program supply device transfers a new program to be replaced to the ECU mounted on the hybrid vehicle. When receiving the new program transferred from the program supply device, the ECU replaces a current program stored in the internal memory unit with the received new program while a battery mounted on the vehicle supplies an electric power to the ECU. In this case, if the voltage level of the battery falls below a specified voltage level, there is a possibility of not being able to perform the reprogramming process correctly because the ECU cannot operate properly. In order to avoid this, conventional techniques, for example, Japanese patent laid open publication No. JP H11-99891 has disclosed a technique to prohibit the execution of the reprogramming process when the voltage of the battery is lower than the specified voltage.

However, when such a conventional technique disclosed in JP H11-99891 is applied to a hybrid vehicle, the execution of the reprogramming process of replacing a program stored in an internal memory unit is prohibited when the voltage level of an auxiliary battery is below a specified level, wherein the hybrid vehicle is equipped with a main battery (as a main power supply) for supplying en electric power to an electric motor capable of generating the driving power of the hybrid vehicle and the auxiliary battery (as an auxiliary power supply) for supplying an electric power to auxiliary devices such as an ECU and other electric devices mounted on the hybrid vehicle. In other words, when the voltage level of the auxiliary battery falls below the specified voltage level, it is difficult to correctly perform the reprogramming process of replacing the program stored in the internal memory unit with a new program.

### SUMMARY OF THE INVENTION

It is an object of the present invention to provide a reprogramming system and an electric control unit (ECU) capable of certainly performing a reprogramming process of replacing a program stored in an internal memory unit with a new program regardless of consideration of a voltage level of a battery to be supplied to the ECU mounted on vehicles such as a hybrid vehicle and an electric car.

To achieve the above purposes, the present invention provides a reprogramming system for a hybrid vehicle which is equipped mainly with a main battery and an auxiliary battery, an electric motor, an internal combustion engine, and electric devices. The main battery supplies an electric power of a high voltage to the electric motor capable of driving the hybrid vehicle. The auxiliary battery supplies an electric power of a voltage lower than the high voltage of the main battery to the electric devices mounted on the hybrid vehicle. The reprogramming system has an electric control unit to which the auxiliary battery supplies the electric power, an auxiliary battery voltage judgment means, and an auxiliary battery charging means. The electric control unit is configured to perform a reprogramming process of replacing a program stored in an internal memory unit in the electric control unit with a new program transferred from a program supply device that is an outside device of the hybrid vehicle when a specified condition is satisfied. In particular, the reprogramming system according to the present invention further has an auxiliary battery voltage judgment means and an auxiliary battery charging means. The auxiliary battery voltage judgment means is configured to judge whether or not the voltage of the auxiliary battery is not more than a reprogramming executable voltage necessary to performing the reprogramming process by the electric control unit. The auxiliary battery charging means is configured to charge the auxiliary battery with the electric power of the main battery when the judgment result of the auxiliary battery voltage judgment means indicates that the voltage of the auxiliary battery is lower than the voltage of the reprogramming executable voltage.

In the reprogramming system of the present invention, it is possible for the electric control unit to perform the reprogramming process certainly. That is, when the voltage of the auxiliary battery falls, there is a possibility of becoming difficult to perform the reprogramming process certainly because the electric control unit cannot operate normally. However, according to the present invention, because the voltage of the auxiliary battery is monitored, and the auxiliary battery is charged when the voltage of the auxiliary battery becomes lower than the reprogramming executable voltage. It is thereby possible to execute the electric control unit that normally prevents the occurrence of the voltage drop of the auxiliary battery. That is, the electric control device can perform the reprogramming operation certainly. In addition, when the present invention is applied to the reprogramming system capable of prohibiting the execution of the reprogramming process when the voltage of the auxiliary battery falls, it is possible to avoid the prohibition of performing the reprogramming operation even if the voltage of the auxiliary battery falls. In other words, according to the present invention, it is possible to always perform the reprogramming operation every conditions at any time.

By the way, there is a possibility of decreasing the voltage of the main battery by which the auxiliary battery is charged with an electric power in the hybrid vehicle. On the other hand, an internal combustion engine is mounted on the hybrid vehicle in addition to the electric motor. The main battery is charged with an electric power generated by the internal combustion engine.

In accordance with another aspect of the present invention, the reprogramming system further has a main battery voltage judgment means and a main battery charging means. The main battery voltage judgment means is configured to judge whether or not the voltage of the main battery is lower than a specified voltage indicating that the main battery enables to adequately charge the auxiliary battery with the electric power. The main battery charging means is configured to charge the main battery with an electric power obtained by driving an engine mounted on the hybrid vehicle when the judgment result of the main battery voltage judgment means indicates that the voltage of the main battery is lower than the specified voltage. The reprogramming system for the hybrid vehicle having the configuration described above enables to prevent the occurrence of the case of being hard to charge the auxiliary battery from the main battery when the voltage of the main battery falls. In other words, according to another aspect of the present invention, it is possible to perform the reprogramming process certainly because the auxiliary battery can be charged securely.

In accordance with another aspect of the present invention, the reprogramming system further has a charging ratio detection means configured to detect the voltage of the main battery and to detect a current flowing through the main battery, and to detect a charging ratio of the main battery based on the detected voltage and the detected current. In the reprogramming system of the present invention, the main battery charging means is configured to charge the main battery with the electric power when the charging ratio of the main battery detected by the charging ratio detection means is lower than a specified value.

According to the reprogramming system having the configuration described above, it is possible to avoid that the voltage of the main battery becomes lower than the specified voltage by charging the main battery when the charging ratio becomes small. On the contrary, such a kind of the battery has different charging ratios of both cases even if the voltage of the main battery detected is same, one is a discharge case when the amount of an discharge electric power is greater than the amount of an charging electric power, and the other is a charging case when the amount of an charge electric power is greater than the amount of a discharging electric power. In a concrete example, the charging ratio of the main battery in discharging process is smaller than that in charging process when the voltage is a same value in both cases. This means that an actual charging ratio in discharging becomes a small value even if the voltage of the main battery is not less than the specified voltage when compared with that in charging. Furthermore, there is a possibility of rapidly decreasing the voltage of the main battery when the charging ratio is small. Accordingly, in the discharging of the main battery, it is possible to avoid the occurrence of rapidly decreasing the voltage of the main battery by charging the main battery even if the voltage of the main battery is over the specified voltage. That is, the present invention enables to avoid the case in which the voltage of the main battery becomes smaller than the specified voltage. Further, it is possible to present the occurrence of the case in which the motor mounted on the hybrid vehicle cannot operate normally by the voltage drop of the main battery.

In accordance with another aspect of the present invention, the reprogramming system further has a charging time calculation means. The charging time calculation means is configured to detect a current value of a current flowing from the main battery into the auxiliary battery and to calculate a charging time until the voltage of the auxiliary battery becomes the reprogramming executable voltage. In the reprogramming system having the above configuration, it is possible for a maintenance man of the hybrid vehicle to easily recognize the charging time or the time until the initiation of the reprogramming process by transferring the information regarding the calculated charging time to the program supply device that is an outside device of the hybrid vehicle and the program supply device receives and displays the information regarding the charging time.

In accordance with another aspect of the present invention, the reprogramming system further has a charging halt means. The charging halt means is configured to halt the operation of the auxiliary battery charging means when the charging time calculated by the charging time calculation means is over a specified time determined in advance. Because the amount of the electric power per time to be supplied to the auxiliary battery becomes large according to the increase of the current value flowing through the auxiliary battery from the main battery, it is considered that in this case a charging time becomes decreased. When the main battery, the auxiliary battery, or the charging line is in abnormal state, it is considered that the charging time becomes long. In a concrete example, when the abnormal state occurs such as the occurrence of the deterioration of the main battery or the auxiliary battery or when a short circuit is made in the charging line through which the main battery is electrically connected to the auxiliary battery or when the charging line is electrically broken, the current flowing through the charging line takes a small value or becomes zero. In this case, the charging time is increased. In order to avoid such a case, the reprogramming system of the present invention halts the charging process from the main battery to the auxiliary battery when the charging time is longer than that the allowable time. This configuration can halt the operation of the auxiliary battery charging means in order to avoid a large amount of electric power consumption in the main battery or to avoid a long charging time.

By the way, the reprogramming process in the ECU is performed only by dealers that have been authorized in advance and it is desired to perform the reprogramming process only within authorized areas and not admitted car repairing shops in order to eliminate the occurrence of unauthorized repairing. Because the electric control unit controls the engine, the motor, and other parts in the hybrid vehicle, it seems undesirable to perform the reprogramming process by such unauthorized dealers or in not admitted car repairing shops.

In accordance with another aspect of the present invention, the reprogramming system further has a vehicle position detection means, an allowable judgment means, and a first inhibition means. The vehicle position detection means is configured to detect a current position of the hybrid vehicle. The allowable judgment means is configured to judge whether or not the current position of the hybrid vehicle is within a specified area where the execution of the reprogramming process is permitted. The first inhibition means is configured to inhibit the execution of the reprogramming process when the detection result of the allowable judgment means indicates that the current position of the hybrid vehicle is outside the specified area.

That is, the execution of the reprogramming system is inhibited in the area other than the allowable areas that have been authorized for performing the reprogramming process in the reprogramming system as another aspect of the present invention. It is thereby possible to avoid unauthorized execution of the reprogramming process and to keep the safety of the hybrid vehicle.

In accordance with another aspect of the present invention, the reprogramming system further has a key judgment means. The key judgment means is configured to judge whether or not an ignition key of the hybrid vehicle is an authorized key. It is further preferred to add a second inhibition means to the reprogramming system of the above configuration. The second inhibition means is configured to inhibit the execution of the reprogramming process when the detection result of the key judgment means indicates that the ignition key is not the authorized key. According to the above reprogramming system, it is possible to prevent the execution of the reprogramming process without the permission of the owner of the hybrid vehicle and to keep the safety of the hybrid vehicle.

In accordance with another aspect of the present invention, there is provided an electric control unit capable of electrically connecting a main battery of a high voltage to an auxiliary battery through electric connection means which are mounted on a hybrid vehicle. In the hybrid vehicle, the main battery is capable of supplying the electric power of the high voltage to an electric motor for driving the hybrid vehicle, and the auxiliary battery is capable of supplying an electric power, which is in voltage lower than the main battery, to electric devices mounted on the hybrid vehicle. The electric control unit is capable of performing a reprogramming process of replacing a program stored in a memory with a new program transferred from a program supply device that is outside the hybrid vehicle when a specified condition is established. The electric control unit has an auxiliary battery voltage judgment means and a start instruction output means. The auxiliary battery voltage judgment means is configured to detect the voltage of the auxiliary battery, and to judge whether or not the voltage of the auxiliary battery is not more than a reprogramming executable voltage necessary to performing the reprogramming process. The start instruction output means is configured to output a start instruction to the electric connection means in order to initiate the electrical connection between the main battery and the auxiliary battery when the judgment result by the auxiliary battery voltage judgment means indicates that the voltage of the auxiliary battery is lower than the reprogramming executable voltage. It is thereby possible to perform the electric power charging from the main battery to the auxiliary battery. When the ECU having such a configuration is applied to a hybrid vehicle, it is possible to perform the reprogramming process certainly like the reprogramming system described above.

### BRIEF DESCRIPTION OF THE DRAWINGS

A preferred, non-limiting embodiment of the present invention will be described by way of example with reference to the accompanying drawings, in which:
FIG. 1 is a view showing a configuration of a hybrid vehicle equipped with a reprogramming system including electric control units according to a first embodiment of the present invention;
FIG. 2 is a flow chart showing a process to be executed by a navigation ECU mounted on the hybrid vehicle shown in FIG. 1;
FIG. 3 is a flow chart showing a process to be executed by an immobiliser ECU mounted on the hybrid vehicle shown in FIG. 1;
FIG. 4 is a flow chart showing a process flow to be executed by a HVECU mounted on the hybrid vehicle shown in FIG. 1;
FIG. 5 is a flow chart showing a monitoring process to be executed by the HVECU mounted on the hybrid vehicle shown in FIG. 1;
FIG. 6 is a graph showing a relationship between a current and charging time in the reprogramming system in the hybrid vehicle shown in FIG. 1;
FIG. 7 is a flow chart showing a reprogramming process flow to be executed by the HVECU mounted on the hybrid vehicle shown in FIG. 1 according to the first embodiment of the present invention;
FIG. 8 is a flow chart showing a reprogramming process flow to be executed by a reprogramming device which is an outside device of the hybrid vehicle 1 according to the first embodiment of the present invention;
FIG. 9 is a view showing a configuration of a hybrid vehicle according to a second embodiment of the present invention;
FIG. 10 is a flow chart showing a charging ratio calculation process to be executed by the HVECU mounted on the hybrid vehicle according to the second embodiment shown in FIG. 9;
FIG. 11 is a flow chart showing a process to be executed by a HVECU mounted on the hybrid vehicle according to the second embodiment of the present invention shown in FIG. 9; and
FIG. 12 is a diagram showing a relationship between a voltage and a charging ratio of a main battery mounted on the hybrid vehicle according to the second embodiment of the present invention shown in FIG. 9.

### DETAILED DESCRIPTION OF THE PREFERRED EMBODIMENTS

Hereinafter, various embodiments of the present invention will be described with reference to the accompanying drawings. In the following description of the various embodiments, like reference characters or numerals designate like or equivalent component parts throughout the several diagrams.

### First embodiment

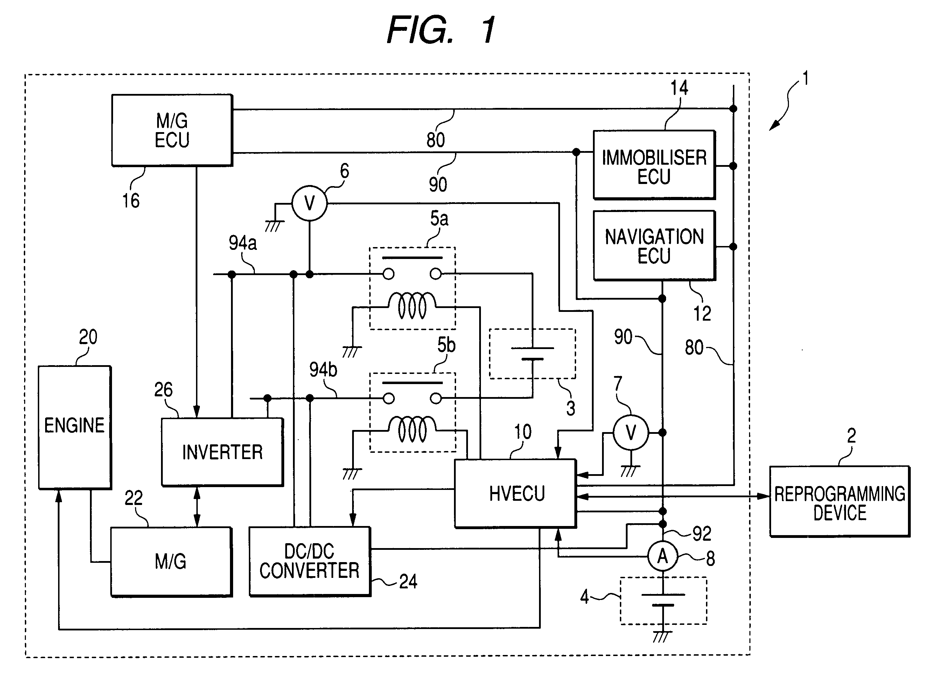

FIG. 1 is a view showing a configuration of a hybrid vehicle equipped with a reprogramming system including electronic control units according to the first embodiment of the present invention. As shown in FIG. 1, the hybrid vehicle 1 of the first embodiment has an engine 20 such as an internal combustion engine, a motor/generator 22 (hereinafter, referred to as "M/G"), a main battery 3, an inverter 26, a M/G electric control unit (M/G ECU) 16 as an electric control unit, an auxiliary battery 4, a DC/DC converter 24, and a HVECU 10 as an electric control unit.

The M/G 22 acts as a motor and an electric generator. The main battery 3 is charged with an electric power supplied from the M/G 22 when the M/G 22 operates as the electric generator. The man battery3 further supplies a high voltage electric power (for example, approximately 300 V) to the M/G 22 when the M/G 22 operates as the motor. The M/G 22 operates under the control of the M/G ECU 16 through the inverter 26. The auxiliary battery 4 supplies an electric power of a low voltage (for example, approximately 12 V) to auxiliary devices such as each of the ECUS and actuators. The DC/DC converter 24 decreases a DC voltage of the main battery 3 and supplies the decreased voltage to the auxiliary battery 4. The HVECU 10 controls the operation of the engine 20 (as an internal combustion engine) and the DC/DC converter 24.

The inverter 26 converts the DC electric power of the main battery 3 to an AC electric power, and then supplies the AC electric power to the M/G 22 in order to execute the M/G 22 under the control of the instruction transferred from the M/G ECU 16. Further, when receiving the instruction transferred from the M/G ECU 16, the inverter 26 controls the operation of the M/G 22 which acts as the generator. Still further, the inverter 26 converts the generated electric power by the M/G 22 to a DC electric power and supplies the DC electric power to the main battery 3. The main battery 3 receives and charges the DC electric power supplied from the inverter 26.

In the hybrid vehicle 1 as shown in FIG. 1, a plus terminal (as a positive terminal) of the main battery 3 is electrically connected to an electric power line 94a through a relay 5a whose on/off operation is controlled by the HVECU 10. The electric power line 94a is electrically connected to the inverter 26 and the DC/DC converter 24. A minus terminal (as a negative terminal) of the main battery 3 is an electric power line 94b through a relay 5b. The HVECU 10 controls on/off operation of the relay 5b. When the HVECU 10 controls so that both the relays 5a and 5b enter ON, the electric power of the main battery 3 is supplied to the inverter 26 and the DC/DC converter 24.

A voltage sensor 6 is mounted on the electric power line 94a that is electrically connected to the positive terminal of the main battery 3. The voltage sensor 6 detects a voltage (high voltage) of the positive terminal of the main battery 3. A voltage sensor 7 is further mounted on an electric power line 90 that is electrically connected to a positive terminal of the auxiliary battery 4. The voltage sensor 7 detects a voltage (high voltage) of the positive terminal of the auxiliary battery 4. Still further, a current sensor 8 is mounted on an electric power line 92 through which the DC/DC converter 24 is electrically connected to the positive terminal of the auxiliary battery 4. The current sensor 8 measures the magnitude of a current flowing from the main battery 3 to the auxiliary battery 4 through the DC/DC converter 24 and also measures the magnitude of a current to be supplied from the auxiliary battery 4 into each ECU such as the HVECU 10, the navigation ECU 12, the immobiliser ECU 14, and the M/G ECU 16.

The HVECU 10 receives detection signals and control signals transferred from the voltage sensors 6, 7 and the current sensor 8.

The navigation ECU 12 and the immobiliser ECU 14 are mounted on the hybrid vehicle 1 according to the first embodiment of the present invention. The navigation ECU 12 controls the navigating function of the hybrid vehicle 1. The immobiliser ECU 12 controls the operation of an electronic engine lock device (hereinafter, referred to as "an immobiliser"). Through an in-vehicle LAN 80 (local area network) in the hybrid vehicle 1, the HVECU 10, the navigation ECU 12, the immobiliser ECU 14, and the M/G ECU 16 are communicated to each other. Each of those ECUS 10, 12, 14, and 16 is equipped with one or more microcomputer, and at least a rewritable nonvolatile memory, that are omitted from the drawings.

The microcomputer in each ECU executes programs stored in the rewritable nonvolatile memory in order to realize the function of each ECU.

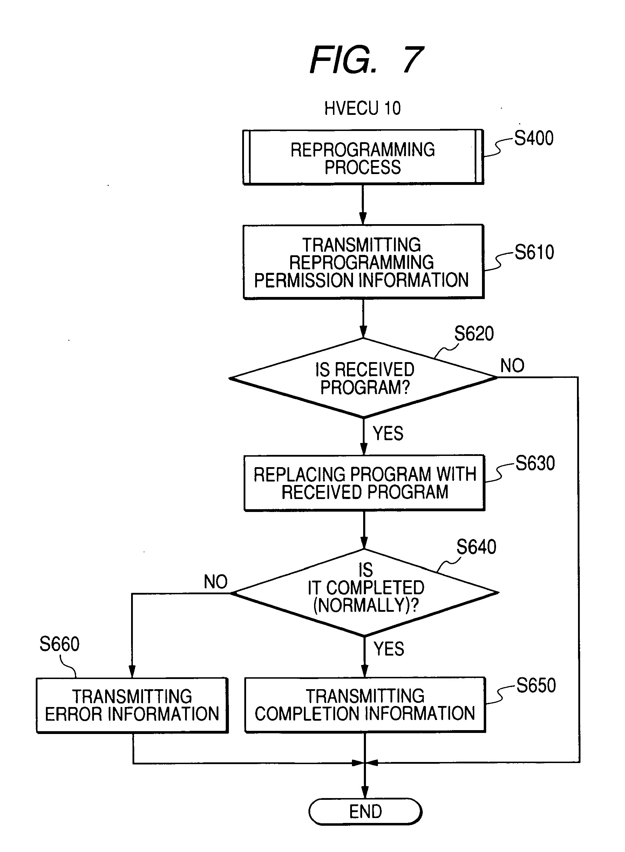

When there is a demand to replace the program stored in the internal memory unit mounted on the ECU (for example, HVECU 10 in this embodiment) with a new program, namely, to rewrite a new program into the internal memory unit, the reprogramming device 2 is electrically connected to the HVECU 10 in the hybrid vehicle 1. Such a program is a control program to control the operation of the engine 20 and the DC/DC converter 24. The reprogramming device 2 operates while receiving an electric power supplied from an external electric power source (not shown). It is acceptable to have a configuration that the reprogramming device 2 is electrically connecting to the HVECU 10 through a connection bus and the like in order to receive a necessary electric power from the auxiliary battery 4 and the like. The reprogramming device 2 transfers an instruction to rewrite or write (hereinafter, referred only to as "rewrite") the program stored in the internal memory unit on the ECU under the control by a maintenance man for the hybrid vehicle 1. When receiving the instruction transferred from the reprogramming device 2, the HVECU 10 further receives a program as a target program to be replaced transferred from the reprogramming device 2 when a specified condition is satisfied. The HVECU 10 then performs the reprogramming process, namely, the rewriting process which will be explained in detail with reference to FIG. 7.

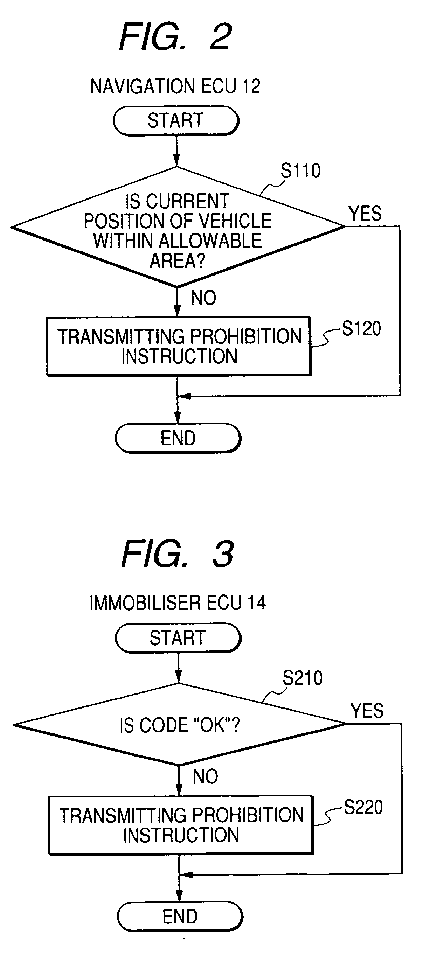

A description will now be given of the operation of the navigation ECU 12 and the immobiliser ECU 14. FIG. 2 is a flow chart showing the process to be executed by the microcomputer in the navigation ECU 12 mounted on the hybrid vehicle 1 shown in FIG. 1. FIG. 3 is a flow chart showing a process to be executed by the immobiliser ECU 14 in the immobiliser ECU 14 mounted on the hybrid vehicle 1 shown in FIG. 1.

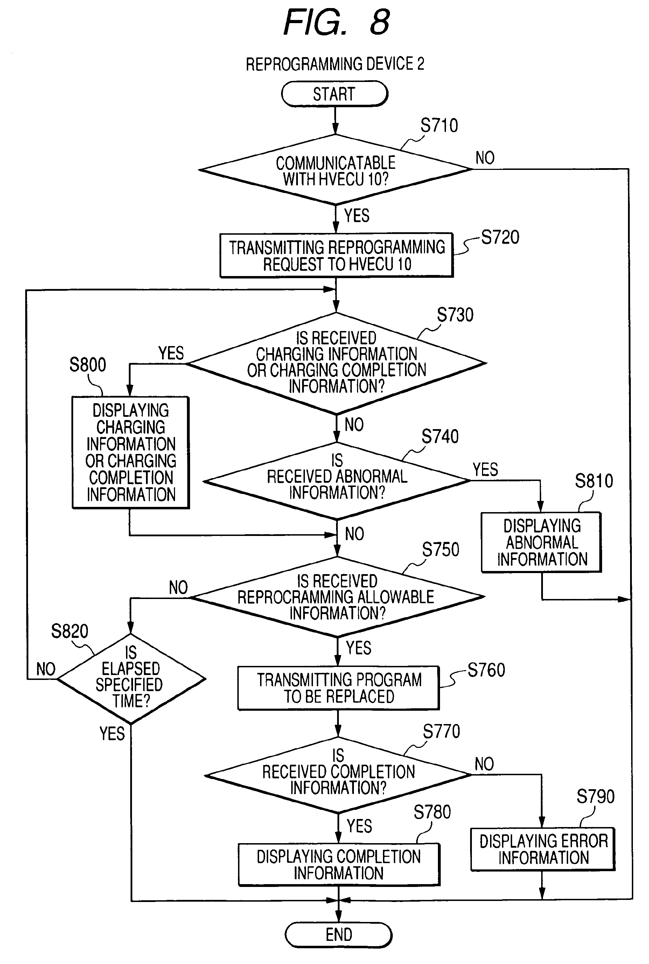

Those processes shown in FIG. 2 and FIG. 3 are initiated when an ignition switch is turned on and the reprogramming device 2 transfers the rewriting instruction to the HVECU 10, at Step S720 shown in FIG. 8 which will be explained later in detail.

As previously explained, the navigation ECU 12, the immobiliser ECU 14, and the HVECU 10 are communicated to each other through the in-vehicle LAN 80. In particular, the navigation ECU 12 and the immobiliser ECU 14 are capable of detecting the transmission of the rewriting request or instruction from the reprogramming device 2 to the HVECU 10.

Firstly, the operation of the navigation ECU 12 will be explained with reference to FIG. 2.

At step S110 shown in FIG. 2, it is detected whether or not the current position of the hybrid vehicle 1 is within an allowable area for executing the reprogramming process (see FIG. 7). For example, the allowable area is a proper dealer shops or car repair shops formally authorized. The information indicating the allowable area (hereinafter referred to as "allowable area information") is stored in advance in the memory unit mounted on the navigation ECU 12. The navigation ECU 12 detects the current position of the hybrid vehicle 1 and judges whether or not the detected current position of the hybrid vehicle 1 is within the allowable area. Such a detection and judgment function is one of the functions of the navigation ECU 12.

At step S110, the operation of the navigation ECU 12 is completed when the judgment result indicates that the current position of the hybrid vehicle 1 is within the allowable area. If not within the allowable area at step S110, the operation flow goes to step S120. At step S120, the navigation ECU 12 generates and transfers a prohibition instruction to the HVECU 10. This prohibition instruction prohibits the execution of the reprogramming process. After this, the operation of the navigation ECU 12 is completed.

Next, a description will be given of the operation of the immobiliser ECU 14 with reference to FIG. 3.

Firstly, at step S210, it is judged whether or not a code transferred from the hybrid vehicle 1 when a key (not shown) of the hybrid vehicle 1 (for example, as an ignition switch of starting the operation of the engine) is turned on is a proper code. When the judgment result of the immobiliser ECU 14 indicates that the code is a proper code, the operation of the immobiliser ECU 14 is completed. If the judgment result indicates that the code is improper, the operation flow goes to step S220. It is acceptable to judge the code as an improper code when the immobiliser ECU 14 cannot recognize the code.

At step S220, the immobiliser ECU 14 generates a prohibition instruction and transfers it to the HVECU 10. The operation of the navigation ECU 12 is completed. This prohibition instruction prohibits the execution of the reprogramming process.

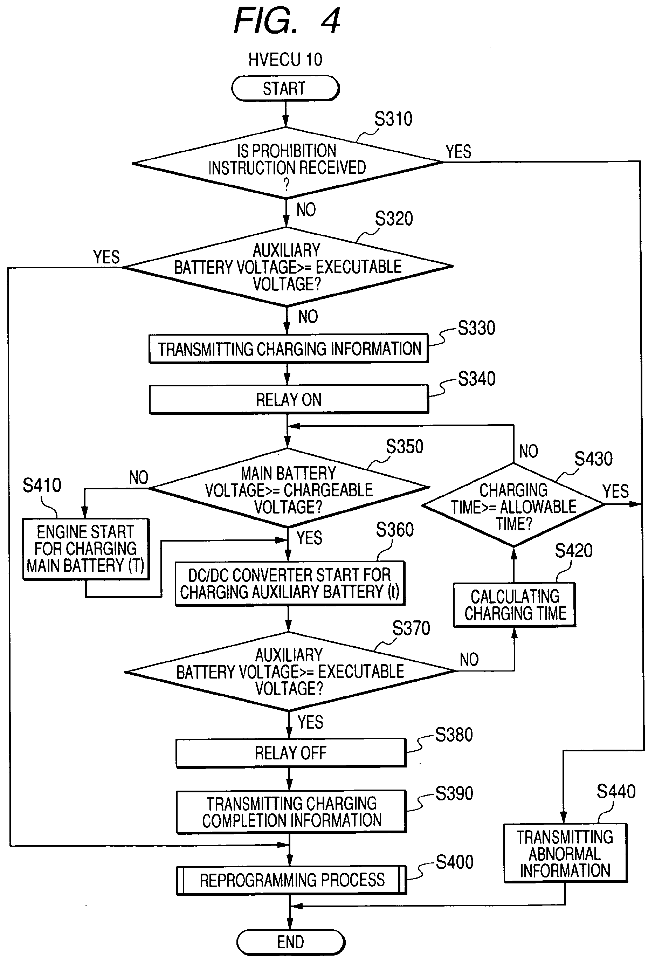

Next, a description will be given of the operation of the HVECU 10 with reference to FIG. 4.

FIG. 4 shows the process flow that becomes initiated when the ignition switch of the hybrid vehicle 1 is turned on and the HVECU 10 receives the reprogramming request (at step S720 shown in FIG. 8 which will be explained later in detail) transferred from the reprogramming device 2.

Firstly, at step S310, the HVECU 10 judges whether or not the prohibition instruction transferred from the navigation ECU 12 at step S120 or the immobiliser ECU 14 at step S220 is received. When the judgment result indicates that the prohibition instruction has received ("YES" at step S310), the operation flow goes to step S440, the HVECU 10 generates abnormal information of indicating the prohibition of the execution of the reprogramming process and transfers the abnormal information to the reprogramming device 2. After this, the operation of the HVECU 10 is completed.

On the other hand, at step S310, the judgment result indicates that the HVECU 10 does not receive any prohibition instruction, the operation flow goes to step S320. At step S320, it is judged whether or not the voltage of the auxiliary battery 4 (hereinafter, referred to as "the auxiliary battery voltage") is not less than an executable voltage at which the HVECU 10 can execute the reprogramming process correctly based on the detection signal transferred from the voltage sensor 7. That is, the auxiliary battery voltage is detected based on the signal transferred from the voltage sensor 7 and it is then judged whether the auxiliary battery voltage is not less than the executable voltage at step S320.

In more detail, the executable voltage is set to a voltage by which the HVECU 10 enables to operate normally even if the voltage falls by the execution of the reprogramming process by the HVECU 10.

When the judgment result indicates that the voltage of the auxiliary battery 4 is lower than the executable voltage ("NO" at step S320), the operation flow goes to step S330. In the hybrid vehicle 1 of the first embodiment, the main battery 4 supplies the electric power in order to charge the auxiliary battery 4 with the electric power when the voltage level of the auxiliary battery 4 is lower than the executable voltage. At step S330, the HVECU 10 generates and transfers the charging information indicating that the auxiliary battery 4 is now charged to the reprogramming device 2.

After this, the operation flow goes to step S340. At step S340, the relay 5a and the relay 5b are turned on in order to electrically connect the main battery 3 to the electric power lines 94a and 94b.

Next, at step S350, the HVECU 10 judges whether or not the voltage of the main battery 3 is not less than the voltage (hereinafter, referred to as "the chargeable voltage") enable to adequately charge the auxiliary battery 4 based on the detection signal transferred from the voltage sensor 6.

When the judgment result indicates that the voltage of the main battery 3 is not less than the chargeable voltage, the operation flow goes to step S360. At step S360, the HVECU 10 outputs the instruction in order to drive the DC/DC converter 24. The DC/DC converter 24 thereby initiates its operation, and as described above, the DC/DC converter 24 decreases the DC voltage of the main battery 3, and the decreased voltage is then supplied to the auxiliary battery 4. In addition, at step S360, the main battery 3 charges the auxiliary battery 4 with the electric power for a specified constant time period "t". In the first embodiment, the chargeable voltage is set to the voltage which can be certainly changed for the specified constant time period "t" from the main battery 3 to the auxiliary battery 4.

When the auxiliary battery 4 is changed for the specified constant time period "t" at step S360, the operation flow goes to step S370. At step S370, the HVECU 10 judges whether or not the voltage of the auxiliary battery is not less than the executable voltage. When the judgment result indicates that the voltage of the auxiliary battery is not less than the executable voltage ("YES" at step S370), the operation flow goes to step S380.

At step S380, the relay 5a and the relay 5b are turned off in order to disconnect the electric power lines 94a and 94b from the main battery 3. At step S390, the HVECU 10 transfers to the reprogramming device 2 the charge completion information that indicates the completion of the charge of the auxiliary battery 4.

Next, the operation flow goes to step S400. At step S400, the reprogramming process is executed, in which the program stored in the internal memory unit mounted on the HVECU 10 is replaced with the new program transferred from the reprogramming device 2. The replacement process will be explained later. After this, the operation of the HVECU 10 is completed.

In addition, at step S320, when the judgment result indicates that the voltage of the auxiliary battery 4 is not less than the executable voltage ("YES" at step S320), the operation flow goes to step S400 in order to execute the reprogramming process.

On the other hand, at step S350, the judgment result indicates that the voltage of the main battery 3 is less than the chargeable voltage ("NO" at step S350), the operation flow goes to step S410. At step S410, the engine 20 of the hybrid vehicle 1 is driven in order to charge the main battery 3 with the electric power. In a concrete example, the M/G 22 acts as the generator to generate the electric power using the output of the engine 20, the AC current generated by the M/G 22 is converted to the DC current by the inverter 26, and the converted DC current is supplied to the main battery 3. The main battery 3 is thereby charged. In this case, the engine 20 is driven, namely, the main battery 3 is charged, for the specified time period "T". After this, the operation flow goes to step S360.

In addition, at step S370, the judgment result indicates that the voltage of the auxiliary battery 4 is less than the executable voltage ("NO" at step S370), the operation flow goes to step S420. At step S420, the charging time is calculated. The charging period of time is the time period until the voltage of the auxiliary battery 4 becomes certainly not less than the executable voltage.

A description will be given of the calculation manner of the charging time.

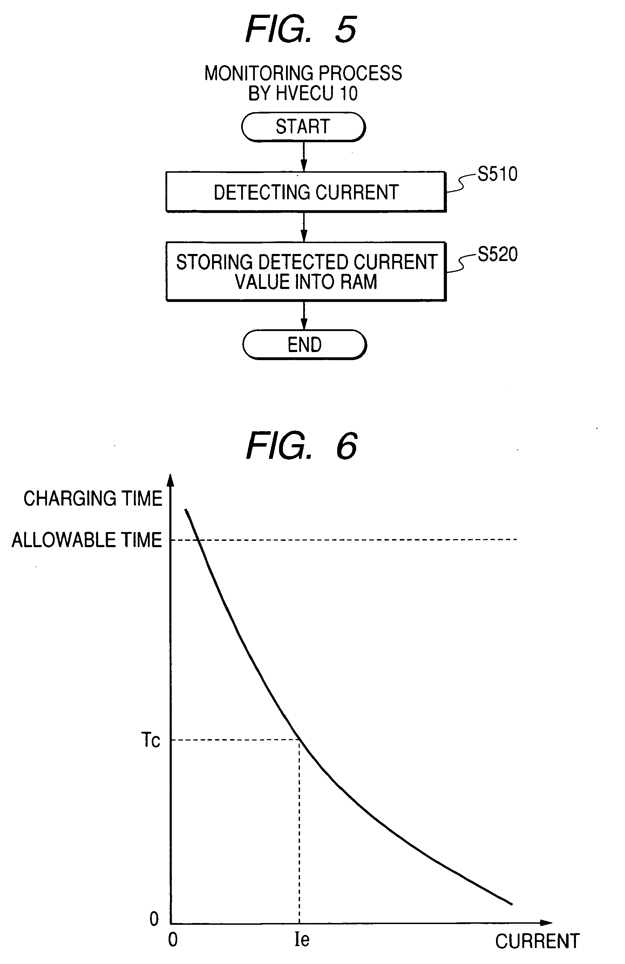

Firstly, the microcomputer mounted on the HVECU 10 executes a regular monitoring process, for example, every an elapsed constant time shown in FIG. 5, in order to monitor the current flowing through the electric power line 92.

At step S510, the microcomputer in the HVECU 10 detects the current flowing through the electric power line 92 based on the detection signal transferred from the current sensor 8 at step S510. The operation flow then goes to step S520. At step S520, the current value detected in step S510 is stored in the memory unit such as a RAM (Random Access Memory) mounted on the HVECU 10. The operation of the HVECU 10 is completed.

FIG. 6 is a graph showing a relationship between a current and charging time in the hybrid vehicle 1 according to the first embodiment shown in FIG. 1. The current flows from the main battery 3 to the auxiliary battery 4 through the electric power lien 92. FIG. 6 shows that the charging time is increased according to the decrease of the current, and on the contrary, the charging time is decreased according to the increase of the current.

The information regarding the relationship between the current value and the charging time is stored in the memory unit mounted on the HVECU 10 in advance. It is acceptable to store such information into a ROM in the microcomputer mounted on the HVECU 10.

At step S420, the current value stored in the RAM is read out and the charging time is calculated based on the read current value and the information, regarding the graph shown in FIG. 6, stored in the memory unit. For example, as shown in FIG. 6, it is so calculated that the charging time becomes Tc when the current value is Ie. The HVECU 10 transfers the calculated charging time to the reprogramming device 2. On receiving the calculated charging time transferred from the HVECU 10, the reprogramming device 2 displays the received charging time on a monitor device (not shown) mounted thereon.

Next, the operation flow goes to step S430. At step S430, it is judged whether or not the charging time calculated at step S420 is longer than the allowable time that has been determined in advance.

It is considered that very short current flows when the main battery 3 or the auxiliary battery 4 is deteriorated or a short circuit is made in the electric power lines 92, 94a and 94b. Still further, it is also considered that no current flows when the electric power lines 92, 94a, or 94b is broken, for example. Those cases require a longer charging time calculated at step S420 (see FIG. 6). The allowable time has been determined or set in advance and when the charging time calculated at step S420 is over the allowable time ("YES" at step S430), it can be judges that the above abnormal phenomenon occurs. The HVECU 10 generates abnormal information and transfers the generated abnormal information to the reprogramming device 2. The operation of the HVECU 10 is thereby completed. That is, in this case, the charging process of charging the auxiliary device 2 is stopped.

On the contrary, the judgment result indicates that the charging time is smaller than the allowable time at step S430 ("NO" at step S430), the operation flow of the HVECU 10 returns to step S350.

FIG. 7 is a flow chart showing the reprogramming process to be executed by the HVECU 10 mounted on the hybrid vehicle 1 shown in FIG. 1 according to the first embodiment of the present invention.

Firstly, at step S610, the HVECU 10 transfers reprogramming permission information to the reprogramming device 2. The reprogramming permission information indicates the permission of executing the reprogramming of replacing the program stored in the internal memory unit on the HVECU 10 with a new program.

Next, the operation flow goes to step S620. At step S620, it is judged whether or not the HVECU 10 receives the new program to be replaced transferred from the reprogramming device 2 which will be explained later at step S760 shown in FIG. 8. The judgment result indicates that the HVECU 10 has received the program transferred from the reprogramming device 2 ("YES" at step S620), the operation flow goes to step S630. At step S630, the current program stored in the internal memory unit is replaced with the new program transferred from the reprogramming device 2.

At step S760 shown in FIG. 8, the reprogramming device 2 transfers to the HVECU 10 the execution program (hereinafter, referred to as "reprogramming execution program") in addition to the new program to be replaced. The reprogramming execution program by which the microcomputer mounted on the HVECU 10 replaces the program stored in the internal memory unit in the HVECU 10 with the new program to be replaced transferred from the reprogramming device 2.

The reprogramming execution program transferred from the reprogramming device 2 is stored in the RAM for the microcomputer. The microcomputer mounted on the HVECU 10 reads out the program, stored in the RAM, and operates based on the reprogramming execution program in order to replace the program with the new program. That is, the processes step S630 and the group of step S640 to step S660 are executed based on the reprogramming execution program transferred from the reprogramming device 2. Other processes are executed based on the programs stored in the ROM in the microcomputer mounted on the HVECU 10.

At step S640 after step S630, it is judged whether or not the reprogramming has been completed correctly. When the judgment result indicates that the reprogramming process has been normally completed ("YES" at step S640), the operation flows goes to step S650. The HVECU 10 generates and transfers to the reprogramming device 2 the completion information indicating that the operation of the HVECU 10 has been normally completed.

On the contrary, when the judgment result indicates that the reprogramming has not been completed, namely, an abnormal event occurs ("NO" at step S640), the operation flow goes to step S660. At step S660, the HVECU 10 generates and transfers error information to the reprogramming device 2. The abnormal information indicates that the reprogramming has not been completed correctly. After this, the operation of the HVECU 10 is completed. In addition, at step S620, the judgment result indicates that the HVECU 10 has not received the program to be replaced ("NO" at step S620), the operation of the HVECU 10 is completed.

FIG. 8 is a flow chart showing the reprogramming process flow to be executed by the reprogramming device 2 shown in FIG. 1 according to the first embodiment of the present invention.

A central processing unit (CPU, omitted from the drawings) mounted on the reprogramming device 2 executes the process shown in FIG. 8 when the operator inputs the instruction (which is the instruction of transferring the reprogramming request), into the reprogramming device 2, so as to replace the current program stored in the memory unit mounted on the HVECU 10 while the reprogramming device 2 is electrically connected to the HVECU 10 and the ignition switch of the hybrid vehicle 1 is turned on.

Firstly, at step S710, the reprogramming device 2 judges whether or not it is possible to communicate with the HVECU 10. When the judgment result indicates the establishment of the communication with the HVECU 10 ("YES" at step S710), the operation flow goes to step S720. At step S720, the reprogramming device 2 transfers the reprogramming request to the HVECU 10.

Next, at step S730 after step S720, it is judged whether or not the reprogramming device 2 receives the charging information. The judgment result indicates not receiving any charging information from the HVECU 10 ("NO" at step S730), the operation flow goes to step S740.

At step S740, it is judged whether or not the reprogramming device 2 receives the abnormal information transferred from the HVECU 10. The judgment result indicates that it is not received ("NO" at step S740), the operation flow goes to step S750.

At step S750, it is judged whether or not the reprogramming device 2 receives the reprogramming allowable information transferred from the HVECU 10. The judgment result indicates the reprogramming allowable information is received correctly ("YES" at step S740), the operation flow goes to step S760.

At step S760, the reprogramming device 2 transfers to the HVECU 10 both of the programs to be replaced and the reprogramming execution program.

Next, at step S770, it is judged whether or not the reprogramming device 2 receives the reprogramming completion information transferred from the HVEU 10. The judgment result indicates the reception of the reprogramming completion information ("YZES" at step S770), the operation flow goes to step S780.

At step S780, the reprogramming completion information is displayed on the display unit mounted on the reprogramming device 2.

On the contrary, at step S770, when the reprogramming device 2 does not receive the reprogramming completion information and judges the reception of the error information ("NO" at step S770) transferred from the HVECU 10 at step S660, the operation flow goes to step S790, the operation flow goes to step S790, and the reprogramming device 2 displays the error information on the display device.

At step S730, the reprogramming device 2 judges the reception of the charging information transferred from the HVECU 10 only after step S720, the operation flow goes to step S800. At step S800, the reprogramming device 2 displays the charging information on the display device thereon. The operation flow then goes to step S750. In this case, because the HVECU 10 does not perform the reprogramming process at step S400 (see FIG. 4 and FIG. 7), the HVECU 10 does not transfer the reprogramming permission information to the reprogramming device 2, in other words, the reprogramming device 2 does not receive the reprogramming permission information transferred from the HVECU 10. As a result, at step S750, it is judged that the reprogramming device 2 does not receive the reprogramming permission information transferred from the HVECU 10.

The operation flow then goes to step S820. At step S820, it is judged whether or not the specified period of time is elapsed after the transmission of the reprogramming request. When the judgment result indicates that the specified period of time has been elapsed ("YES" at step S820), the operation of the reprogramming device 2 is completed. For example, this case is caused when the communication between the HVECO 10 and the reprogramming device 2 is not established because of the occurrence of abnormal state in the communication between them.

On the contrary, the judgment result indicates that the specified period of time has not been elapsed ("NO" at step S820), the operation flow is returned to step S730. In the case of the operation from step S820 to step S730, it is judged whether or not the reprogramming device 2 has received the charging completion information transferred from the HVECU 10 at step S390. The judgment result indicates the reception of the charging completion information ("YES" at step S730), the reprogramming device 2 displays the charging completion information on the display device at step S800. The operation flow then goes to step S750.

On the contrary, at step S730 only flowing after step S820, the judgment result indicates that the reprogramming device 2 has not received the charging completion information ("NO" at step S730), the operation flow goes to step S740. At step S740, the judgment result indicates that the reprogramming device 2 has not received the abnormal information because the HVECU 10 does not transfer the abnormal information to the reprogramming device 2.

As described above, according to the first embodiment, when receiving the reprogramming instruction indicating the necessity of replacing the current program stored in the internal memory unit in the HVECU 10 with a new program, the reprogramming device 2 generates and transfers the reprogramming request to the HVECU 10 (at step S720).

The navigation ECU 12 then performs the process shown in FIG. 2 and the immobiliser ECU 14 performs the process shown in FIG. 3. The HVECU 10 generates and transfers the reprogramming permission information to the reprogramming device 2 (at step S610) when the HVECU 10 does not receive the execution of the reprogramming process ("NO" at step S310 indicating the inhibition of the execution of the reprogramming process) and the voltage of the auxiliary battery 4 is not less than the executable voltage ("YES" at step S320).

Following, when receiving the reprogramming program as the target program to be replaced transferred from the reprogramming device 2 ("YES" at step S620), the HVECU 10 replaces the current program stored in the internal memory unit with the received reprogramming program (at step S630).

On the contrary, the electric power of the main battery 3 charges the auxiliary battery 4 with the electric power (at step S360) when the HVECU 10 does not receive the inhibition instruction regarding the execution of the reprogramming processing ("NO" at step S310) and the voltage of the auxiliary battery 4 is not over the executable voltage ("NO" at step S320). Further, the main battery 3 is charged with the electric power (at step S410) when the voltage of the main battery 3 is not less than the chargeable voltage ("NO" at step S350). Still further, the charging time of the auxiliary battery 4 is calculated (at step S420). In this case, when the calculated charging time is over the allowable time ("YES" at step S430), the HVECU 10 judges the occurrence of the abnormal state such as the deterioration of the main battery 3 or the auxiliary battery 4, and the formation of the short circuit or the breaking of the electric power lines 92, 94a, 94b. As a result, the HVECU 10 inhibits the charging of the electric power to the auxiliary battery 4.

The relationship between the components and the operation steps in the first embodiment described above and the definition in claims according to the present invention is as follows.

An auxiliary battery voltage judgment means corresponds to the process composed of steps S320 and 370; an auxiliary battery charging means corresponds to the process of step S360; a main battery voltage judgment means corresponds to the process of step S350; a main battery charging means corresponds to the process of step S410; a charging time calculation means corresponds to the process of step S420; a charging halt means corresponds to the judgment process of "YES" at the step S430; a charging halt means corresponds to the judgment process of "YES" at the step S430; a vehicle position detection means corresponds to the navigation ECU 12; an allowable judgment means corresponds to the process of step S110; A first inhibition means corresponds to the process of step S120; a first inhibition means corresponds to the process of step S120; a key judgment means corresponds to the process of step S210; a second inhibition means corresponds to the process of step S220; an electronic connection means corresponds to the DC/DC converter 24, the relays 51 and 5b, and the electric power lines 92, 94a and 94b; and an ignition instruction output means corresponds to the process composed of steps 340 and 360.

According to the first embodiment as described above in detail, it is possible to replace the program stored in the internal memory unit of the HVECU 10 with the new program certainly. In other words, the first embodiment of the present invention enables to certainly perform the reprogramming process shown in FIG. 7 because the auxiliary battery 4 is charged with the electric power when the voltage thereof becomes lower than the executable voltage described above, and this enables to avoid the occurrence in which the HVECU 10 cannot perform the reprogramming process caused by the voltage drop of the auxiliary battery 4. Further, when the voltage of the main battery 3 capable of charging the auxiliary battery 4 with the electric power is lower than that of the chargeable voltage, the main battery 3 is charged instead. This enables to certainly perform the charging process of the main battery 3 to the auxiliary battery 4.

In the first embodiment of the present invention, the charging period of time until the voltage of the auxiliary battery 4 is not less than the executable voltage is displayed on the display device (not shown) in the reprogramming device 2. It is thereby possible for a maintenance or repairing man to easily recognize the necessary charging time of the batteries and the time until the initiation of executing the reprogramming process. Still further, when the necessary charging time is longer than the allowable time, the HVECU 10 judges that the abnormal state occurs, and the charging operation for the auxiliary battery 4 is halted temporarily, and the HVECU 10 transfers the abnormal information to the reprogramming device 2. This can prevent the execution of the charging operation under the abnormal condition in which the auxiliary battery 4 is not adequately charged, for example, and the maintenance or repairing man can thereby recognize the occurrence of the abnormal slate through the information displayed on the display device mounted on the reprogramming device 2.

Still further, according to the first embodiment of the present invention, the execution of the reprogramming process is halted if the hybrid vehicle 1 is in the outside of the allowable areas predetermined in advance, or when the code transferred from the hybrid vehicle 1 is not a licensed code (or a authorized code). It is thereby possible to prevent the execution of replacing the program stored in the internal memory unit mounted on the HVECU 10. Those features can keep the safe drive of the hybrid vehicle 1.

### Second embodiment

Next, a description will be given of the configuration and operation of the hybrid vehicle according to the second embodiment of the present invention.

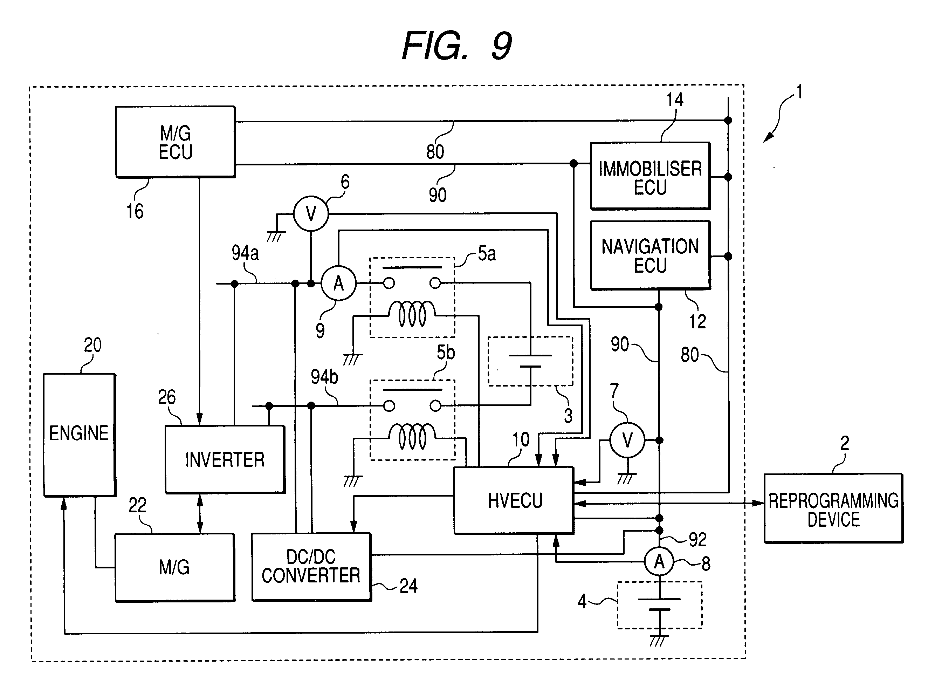

FIG. 9 is a view showing a configuration of the hybrid vehicle 1 according to the second embodiment of the present invention.

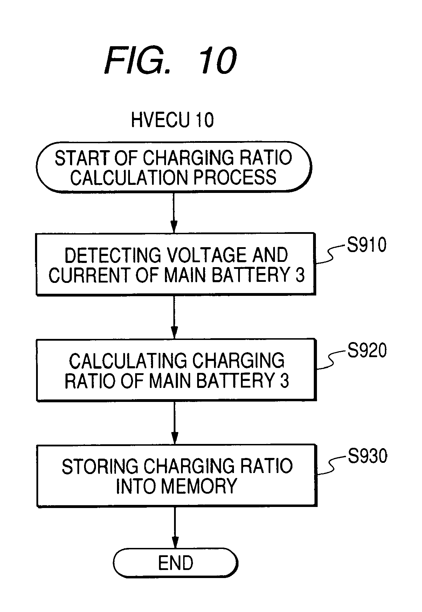

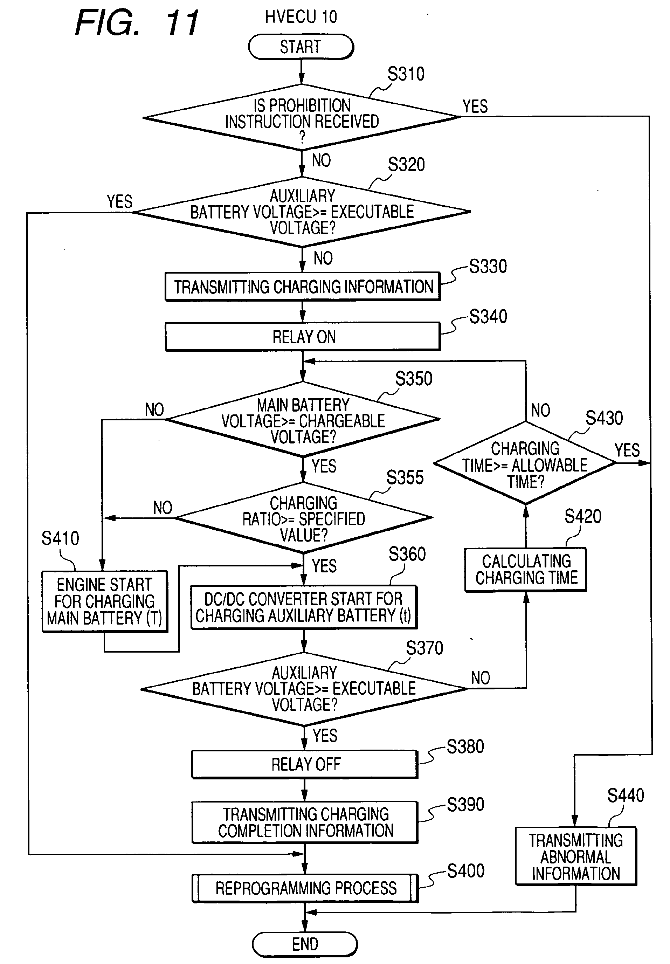

As shown in FIG. 9, the hybrid vehicle 1 of the second embodiment further has a current sensor 9 when compared with the configuration of the hybrid vehicle 1 of the first embodiment shown in FIG. 1. Other components of the second embodiment shown in FIG. 9 other than the current sensor 9 are the same of the components of the first embodiment shown in FIG. 1. In addition, when compared with the operation of the hybrid vehicle of the first embodiment shown in FIG. 1, the hybrid vehicle of the second embodiment shown in FIG. 9 performs the different operation of calculating a charging ratio calculation shown in FIG. 10 and performs the operation shown in FIG. 11 instead of the operation shown in FIG. 4. The same components between the first and second embodiments are referred to as the same reference numbers, and the explanation of the same components is therefore omitted here.

In a concrete example, the current sensor 9 measures the amount of an input current to and an output current from the main battery 3. The current sensor 9 is electrically connected to the electrical power line 94a that is connected to a positive terminal of the current sensor 9. The HVECU 10 inputs the signal transferred from the current sensor 9.

When compared with the operation of the first embodiment shown in FIG. 4, the process of the second embodiment shown in FIG. 11 further includes an additional step S355. Other steps are same in the first and second embodiments shown in FIG. 5 and FIG. 7. In addition, the first and second embodiments perform the same process of the navigation ECU 12 shown in FIG. 2, the same process of the immobiliser ECU 14 shown in FIG. 3, and the process of the reprogramming device 2 shown in FIG. 8. The charging ratio calculation process according to the second embodiment shown in FIG. 10 calculates the charging ratio of the main battery 3 every specified time interval.

Firstly, at step S910 in the process, the microcomputer mounted on the HVECU 10 detects the voltage (at a high voltage side) of the main battery 3 and the current flowing into the main battery 3 based on the signals transferred from the voltage sensor 6 and the current sensor 9.

The operation flow goes to step S920. At step S920, the charging ratio of the main battery 3 is calculated based on the voltage and the current detected by the voltage sensor 6 and the current sensor 9 at step S910. Because the calculation manner of calculating the charging ratio is well known, the detailed explanation thereof is omitted here.

At step S930, the calculated charging ratio is stored into a memory unit such as an EEPROM (an Electronically Erasable and Programmable Read Only Memory, omitted from the drawings) mounted on the HVECU 10 which is other than the RAM in the microcomputer mounted on the HVECU 10. After this, the calculation operation is completed.

At step S355 shown in FIG. 11, the charging ratio of the main battery 3 stored in the RAM or the EEPROM is read out and it is judged whether or not the charging ratio read out is a specified value. When the judgment result indicates that the charging ratio is not less than the specified value ("YES" at step S355), the operation flow goes to step S360. On the contrary, when the judgment result indicates that the charging ratio is less than the specified value ("NO" at step S355), the operation flow goes to step S410.

In the second embodiment described above, it is judged whether or not the charging of the main battery 3 is performed based on the charging ratio of the main battery 3 in addition to the judgment whether or not the chargeable voltage is not less than the chargeable voltage. This enables to prevent the occurrence of becoming impossible to charge the auxiliary battery 4 when the voltage of the main battery 3 falls. The detailed explanation thereof will be described later.

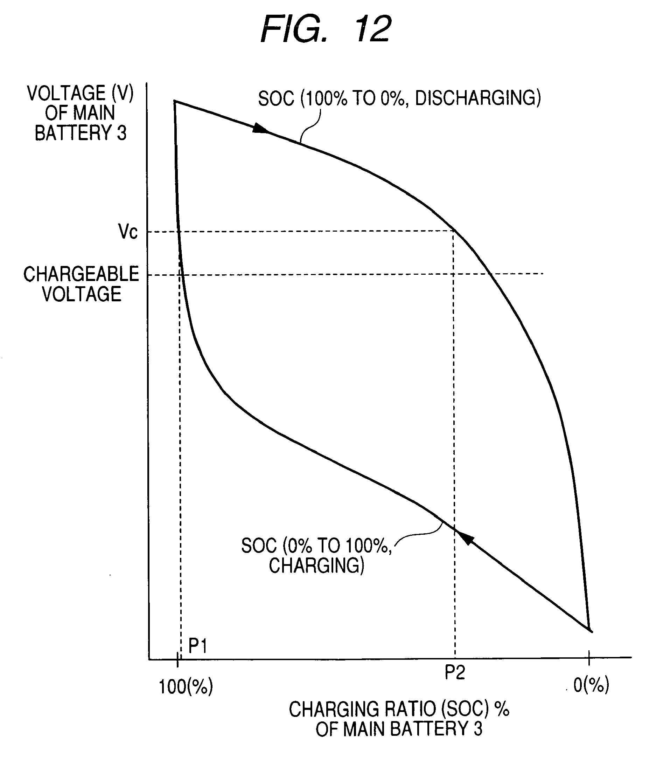

FIG. 12 is a diagram showing a relationship between the voltage and the charging ratio (SOC, State of Charge) of the main battery 3 mounted on the hybrid vehicle 1 according to the second embodiment shown in FIG. 9.

As shown in FIG. 12, at the initial stage of the charging process in which the charging ratio is changed from 0% to 100%, the raising ratio of the voltage of the main battery 3 is lower than the raising ratio of the charging ratio. On the contrary, the raising ratio of the voltage of the main battery 3 is rapidly increased when compared with the raising ratio of the charging ratio at the stage near the charging process of 100%.

On the other hand, at the initial stage in the discharging process in which the charging ratio is changed from 100% to 0%, the falling ratio of the voltage of the main battery 3 is lower than that of the charging ratio. On the contrary, the falling ratio of the voltage of the main battery 3 is rapidly decreased when compared with that of the charging ratio at the stage near the charging ratio of 0%.

For example, when it is assumed that the voltage of the main battery 3 calculated based on the signal transferred to the voltage sensor 6 is Vc, the charging ratio of the main battery 3 becomes P1 in the charging process and becomes P2 (P1 > P2) in the discharging process. That is, the charging ratio of the main battery 3 during the charging process is greatly different at the same voltage from that during the discharging process.

For example, even if the voltage of the main battery 3 is not less than the chargeable voltage during the discharging process, there is a possibility of actually having a small charging ratio of the main battery 3. Further, there is also a possibility of rapidly falling the voltage of the main battery 3 on being a small charging ratio. Accordingly, even if the voltage of the main battery 3 is not less than the chargeable voltage, it is possible to certainly avoid the occurrence of falling the voltage of the main battery 3 by performing the charging process for the main battery 3 only when the charging ratio is smaller than the specified value. The process composed of steps S910 and S920 corresponds to charging ratio detecting means.

The concept of the reprogramming system and the ECU according to the present invention is not limited by the configurations of the first and second embodiments, the present invention can be applied to various modifications within the scope of the present invention. For example, although the first and second embodiments have explained the case of replacing the program stored in the internal memory unit mounted on the HVECU 10 with a new program transferred from the reprogramming device 2, the concept of the present invention is not limited by the configuration. It is acceptable to have other cases of replacing a program stored in an internal memory mounted on the navigation ECU 12, the immobiliser ECU 14, or the M/G ECU 16 with a new program.

Further, although the configurations of both of the first and second embodiments described above have shown that the reprogramming device 2 transfers the program to be replaced to the HVECU 10, it is acceptable for the HVECU 10 to communicate with an external communication device through a radio wave in order to download a target program to be replaced provided from the external communication device through the radio wave.

Still further, in the second embodiment of the present invention, it is possible to have the configuration in which the process of step S355 is executed instead of the process of step S350. That is, the necessity of performing the charging for the main battery 3 is judged based on the charging ratio of the main battery 3 regardless of the magnitude of the voltage of the main battery 3.

While specific embodiments of the present invention have been described in detail, it will be appreciated by those skilled in the art that various modifications and alternatives to those details could be developed in light of the overall teachings of the disclosure. Accordingly, the particular arrangements disclosed are meant to be illustrative only and not limited to the scope of the present invention which is to be given the full breadth of the following claims and all equivalent thereof.

## Claims

1. A reprogramming system for a hybrid vehicle equipped with a main battery supplying an electric power of a high voltage to an electric motor capable of driving the hybrid vehicle and an auxiliary battery supplying an electric power of a voltage lower than the high voltage of the main battery to electric devices mounted on the hybrid vehicle, and the reprogramming system comprising:
an electric control unit, to which the auxiliary battery supplies the electric power, configured to perform a reprogramming process of replacing a program stored in an internal memory unit in the electric control unit with a new program transferred from a program supply device that is an outside device of the hybrid vehicle when a specified condition is satisfied;
auxiliary battery voltage judgment means configured to judge whether or not the voltage of the auxiliary battery is not more than a reprogramming executable voltage necessary of performing the reprogramming process by the electric control unit; and
auxiliary battery charging means configured to charge the auxiliary battery with the electric power of the main battery when the judgment result of the auxiliary battery voltage judgment means indicates that the voltage of the auxiliary battery is lower than the voltage of the reprogramming executable voltage.

2. The reprogramming system for a hybrid vehicle according to claim 1, further comprising:
main battery voltage judgment means configured to judge whether or not the voltage of the main battery is lower than a specified voltage indicating that the main battery enables to adequately charge the auxiliary battery with the electric power; and
main battery charging means configured to charge the main battery with an electric power obtained by driving an engine mounted on the hybrid vehicle when the judgment result of the main battery voltage judgment means indicates that the voltage of the main battery is lower than the specified voltage.

3. The reprogramming system for a hybrid vehicle according to claim 2, further comprising a charging ratio detection means configured to detect the voltage of the main battery and to detect a current flowing through the main battery, and to detect a charging ratio of the main battery based on the detected voltage and the detected current,
wherein the main battery charging means is configured to charge the main battery with the electric power when the charging ratio of the main battery detected by the charging ratio detection means is lower than a specified value.

4. The reprogramming system for a hybrid vehicle according to claim 1, further comprising charging time calculation means configured to detect a current value of a current flowing from the main battery into the auxiliary battery and to calculate a charging time until the voltage of the auxiliary battery reaches the reprogramming executable voltage.

5. The reprogramming system for a hybrid vehicle according to claim 2, further comprising charging time calculation means configured to detect a current value of a current flowing from the main battery into the auxiliary battery and to calculate a charging time until the voltage of the auxiliary battery reaches the reprogramming executable voltage.

6. The reprogramming system for a hybrid vehicle according to claim 3, further comprising charging time calculation means configured to detect a current value of a current flowing from the main battery into the auxiliary battery and to calculate a charging time until the voltage of the auxiliary battery reaches the reprogramming executable voltage.

7. The reprogramming system for a hybrid vehicle according to claim 4, further comprising charging halt means configured to halt the operation of the auxiliary battery charging means when the charging time calculated by the charging time calculation means is over a specified time that is determined in advance.

8. The reprogramming system for a hybrid vehicle according to claim 5, further comprising charging halt means configured to halt the operation of the auxiliary battery charging means when the charging time calculated by the charging time calculation means is over a specified time that is determined in advance.

9. The reprogramming system for a hybrid vehicle according to claim 6, further comprising charging halt means configured to halt the operation of the auxiliary battery charging means when the charging time calculated by the charging time calculation means is over a specified time that is determined in advance.

10. The reprogramming system for a hybrid vehicle according to claim 1, further comprising:
vehicle position detection means configured to detect a current position of the hybrid vehicle;
allowable judgment means configured to judge whether or not the current position of the hybrid vehicle is within a specified area where the execution of the reprogramming process is permitted; and
first inhibition means configured to inhibit the execution of the reprogramming process when the detection result of the allowable judgment means indicates that the current position of the hybrid vehicle is out of the specified area.

11. The reprogramming system for a hybrid vehicle according to claim 1, further comprising:
key judgment means configured to judge whether or not an ignition key of the hybrid vehicle is an authorized key; and
second inhibition means configured to prohibit the execution of the reprogramming process when the detection result of the key judgment means indicates that the ignition key is not the authorized key.

12. An electric control unit capable of electrically connecting a main battery of a high voltage to an auxiliary battery through electric connection means which are mounted on a hybrid vehicle in which the main battery supplies the electric power of the high voltage to an electric motor for driving the hybrid vehicle and the auxiliary battery supplies an electric power whose voltage is lower than the voltage of the main battery to electric devices mounted on the hybrid vehicle, and the electric control unit configured to perform a reprogramming process of replacing a program stored in a memory with a new program transferred from a program supply device located at the outside of the hybrid vehicle when a specified condition is established, and the electric control unit comprising:
auxiliary battery voltage judgment means configured to detect the voltage of the auxiliary battery and to judge whether or not the voltage of the auxiliary battery is not more than a reprogramming executable voltage necessary to performing the reprogramming process; and
start instruction output means configured to output a start instruction to the electric connection means in order to initiate the electrical connection between the main battery and the auxiliary battery when the judgment result of the auxiliary battery voltage judgment means indicates that the voltage of the auxiliary battery is lower than the reprogramming executable voltage.
